# EUROPÄISCHE PATENTSCHRIFT

(11) **EP 2 686 624 B1**
(45) Veröffentlichungstag und Bekanntmachung des Hinweises auf die Patenterteilung: **05.08.2015**
(21) Anmeldenummer: 12706608.2
(22) Anmeldetag: 02.03.2012
(51) Int. Cl.: F25D 3/00, F25D 11/00

(54) **KÄLTEGERÄT MIT WÄRMESPEICHER**
REFRIGERATOR COMPRISING A HEAT ACCUMULATOR
APPAREIL DE FROID POURVU D'UN ACCUMULATEUR DE CHALEUR

(30) Priorität: 14.03.2011 DE 102011005480; 20.05.2011 DE 102011076169
(43) Veröffentlichungstag der Anmeldung: 22.01.2014
(73) Patentinhaber: BSH Hausgeräte GmbH, 81739 München (DE)
(72) Erfinder: HOLZER, Stefan, 73430 Aalen (DE); MRZYGLOD, Matthias, 89075 Ulm (DE)
(86) Internationale Anmeldenummer: PCT/EP2012/053632
(87) Internationale Veröffentlichungsnummer: WO 2012/123268

(56) Entgegenhaltungen:
- EP-A2- 0 974 794
- WO-A2-2009/000722
- DE-A1- 19 736 916
- FR-A1- 2 745 894

## Beschreibung

Die vorliegende Erfindung betrifft ein Kältegerät, insbesondere ein Haushaltskühlgerät mit einer Lagerkammer für Kühlgut, einem in thermischen Kontakt mit der Lagerkammer angeordneten, zum Halten der Lagerkammer in einem vorgegebenen Temperaturbereich intermittierend arbeitenden Verdampfer und einem dem Verdampfer zugeordneten Wärmespeicher, der ein Speichermedium enthält, das in Betriebs- und Ruhephasen des Verdampfers jeweils seinen Aggregatzustand ändert, wobei der vorgegebene Temperaturbereich der Lagerkammer über 0°C und die Schmelztemperatur des Speichermediums unter 0°C liegt.

Ein Kältegerät gemäß dem Oberbegriff von Anspruch 1 ist aus FR 2 745 894 A1 bekannt.

Als Speichermedium wird in FR 2 745 894 A1 unter anderem Wasser vorgeschlagen. Dieses dehnt sich beim Gefrieren aus, deswegen müssen die Wände des Wärmespeichers nachgiebig sein. Eine Verformung der Wände kann die Wärmeübertragung zwischen Verdampfer und Wärmespeicher beeinträchtigen.

Aufgabe der vorliegenden Erfindung ist, einen einfachen und preiswerten Weg anzugeben, um die Effektivität der Kälteerzeugung auch in einem Kältegerät zu verbessern, bei dem eine Lagerkammer einen vorgegebenen Temperaturbereich von über 0°C hat.

Die Aufgabe wird gelöst durch ein Kältegerät mit den Merkmalen des Anspruchs 1. Unteransprüche sind auf vorteilhafte Weiterbildungen gerichtet.

Überraschenderweise zeigt sich, dass die Verwendung eines Speichermediums mit einer Schmelztemperatur unter 0°C an einer solchen Lagerkammer, wenn diese insbesondere als Kühl- oder Kaltlagerach eines Haushaltskühlschrankes ausgebildet ist, eine deutliche Effizienzsteigerung auch und ausgerechnet dann ermöglicht, wenn die verwendete Menge des Speichermediums zu gering ist, um eine Abkühlung der Lagerkammer unter 0°C in einer Ruhephase des Verdampfers zu bewirken.

Die Wirkung des Speichermediums basiert hier nicht wie in DE 10 2004 035 017 A1 auf einer Funktion als Kältespeicher während der Ruhephasen des Verdampfers, sondern als Wärmespeicher während seiner Betriebsphasen. Indem nämlich der Wärmespeicher eine starke Abkühlung des Verdampfer zumindest zu Beginn einer Betriebsphase desselben verhindert, hält er den Dampfdruck des Kältemittels im Verdampfer auf einem hohen Wert und verringert so zum einen die Druckdifferenz, gegen die ein Verdichter anarbeiten muss, um das Kältemittel wieder zu kondensieren und zum anderen das Volumen, das zum Verdichten einer gegebenen Masse des Kältemittels vom Verdichter durchgesetzt werden muss.

Die Schmelztemperatur des Speichermediums sollte deutlich unter 0°C liegen, um sicherzustellen, dass das Speichermedium komplett geschmolzen ist, bevor in einer Ruhephase der Verdampfer beginnt, sich über 0°C zu erwärmen. Ein in regelmäßigen Zeitabständen erforderliches Abtauen des Verdampfers wird daher nicht durch gleichzeitiges Schmelzen des Speichermediums verlängert. Hierfür ist es bevorzugt, wenn die Schmelztemperatur des Speichermediums unter -2°C liegt.

Da andererseits eine zu tiefe Schmelztemperatur nur noch wenig Einfluss auf den Dampfdruck des Kältemittels im Verdampfer hat, sollte die Schmelztemperatur des Speichermediums auch nicht niedriger als -10°C sein.

Als Speichermedium kommt eine preiswerte wässrige Lösung in Betracht, insbesondere z.B. von Ethylenglykol oder Harnstoff.

Eine besonders hohe Stabilität des Speichermediums und eine gute Handhabbarkeit des Trägermaterials sind erreichbar, wenn das Speichermedium in Kapseln enthalten ist, die in das Trägermaterial eingebettet sind. Wenn das Material der Kapseln bei einer Temperatur noch stabil ist, bei der das Trägermaterial weich wird, ist es beispielsweise möglich, das Trägermaterial mit samt den darin enthaltenen Kapseln thermoplastisch zu formen, um den Wärmespeicher zu fertigen.

Besonders wirksam ist der Wärmespeicher, wenn der Verdampfer in der Lagerkammer angeordnet ist. Die Erfindung ist zwar auch z.B. an einem Coldwall-Verdampfer anwendbar, der außerhalb der Lagerkammer, zwischen dieser und einer Isolationsmaterialschicht des Kältegeräts angeordnet ist, doch ist der Zugewinn an Effizienz bei einem in der Lagerkammer angeordneten Verdampfer größer.

Um wirksam zu sein, ist der Wärmespeicher vorzugsweise in körperlichem Kontakt mit dem Verdampfer angeordnet.

Wenn der Verdampfer plattenförmig ist, kann ein enger thermischer Kontakt zwischen Verdampfer und Wärmespeicher erzielt werden, wenn eine Seite des Verdampfers wenigstens überwiegend von dem Wärmespeicher bedeckt ist.

Wenn der Verdampfer benachbart zu einer Wand der Lagerkammer angeordnet ist, befindet sich der Wärmespeicher vorzugsweise an einer von der Wand abgewandten Seite des Verdampfers, so dass Kühlgut in der Lagerkammer im Wesentlichen durch den Wärmespeicher hindurch gekühlt wird.

Wenn der Verdampfer ein Rollbond- oder Tube-on-sheet-Verdampfer ist, ist der Wärmespeicher zweckmäßigerweise an einer ebenen Seite des Verdampfers angeordnet.

Die Menge des Speichermediums ist vorzugsweise auf die Kühlleistung des Verdampfers in einer Betriebsphase abgestimmt, so dass zwei bis zwanzig Minuten Betrieb des Verdampfers ausreichen, um das Speichermedium zu gefrieren. Eine Gefrierzeit von unter zwei Minuten ist wenig effektiv, da der Verdampfer zu Beginn einer Betriebsphase auch dann eine Zeitspanne ähnlicher Größenordnung zum Abkühlen benötigt, wenn kein Wärmetauscher vorhanden ist. Eine längere Abkühlzeit als zwanzig Minuten erfordert eine große Menge des Speichermediums und schränkt dadurch das nutzbare Volumen der Lagerkammer ein.

Die mittlere Dauer einer Betriebsphase des Verdampfers sollte länger als die zum Gefrieren des Speichermediums erforderliche Zeit sein, um dessen Wirkungspotenzial voll auszuschöpfen. Andererseits sollte sie nicht wesentlich länger, insbesondere maximal doppelt so lang wie die zum Gefrieren des Speichermediums erforderliche Zeit sein, um den Anteil einer Betriebsphase des Verdampfers, in der dessen Temperatur deutlich unter der Gefriertemperatur des Speichermediums liegt und die Energieeffizienz des Verdampfers dementsprechend eingeschränkt ist, an der Gesamtbetriebszeit des Kältegerätes gering zu halten.

Weitere Merkmale und Vorteile der Erfindung werden deutlich anhand der nachfolgenden Beschreibung von Ausführungsbeispielen unter Bezugnahme auf die beigefügten Figuren. Aus dieser Beschreibung und den Figuren gehen auch Merkmale der Ausführungsbeispiele hervor, die nicht in den Ansprüchen erwähnt sind. Solche Merkmale können auch in anderen als den hier spezifisch offenbarten Kombinationen auftreten. Die Tatsache, dass mehrere solche Merkmale in einem gleichen Satz oder in einer anderen Art von Textzusammenhang miteinander erwähnt sind, rechtfertigt daher nicht den Schluss, dass sie nur in der spezifisch offenbarten Kombination auftreten können; stattdessen ist grundsätzlich davon auszugehen, dass von mehreren solchen Merkmalen auch einzelne weggelassen oder abgewandelt werden können, sofern dies die Funktionsfähigkeit der Erfindung nicht in Frage stellt. Es zeigen:
- Fig. 1: einen schematischen Querschnitt durch ein erfindungsgemäßes Kältegerät;
- Fig. 2: ein vergrößertes Detail aus Fig. 1 gemäß einer ersten Ausgestaltung;
- Fig. 3: dasselbe Detail gemäß einer zweiten Ausgestaltung;
- Fig. 4: typische Temperaturverläufe herkömmlicher Verdampfer und eines Verdampfers gemäß der vorliegenden Erfindung während einer Betriebsphase und im Anschluss daran; und
- Fig. 5: einen typischen Temperaturverlauf eines Verdampfers gemäß der vorliegenden Erfindung während einer Abtauphase.

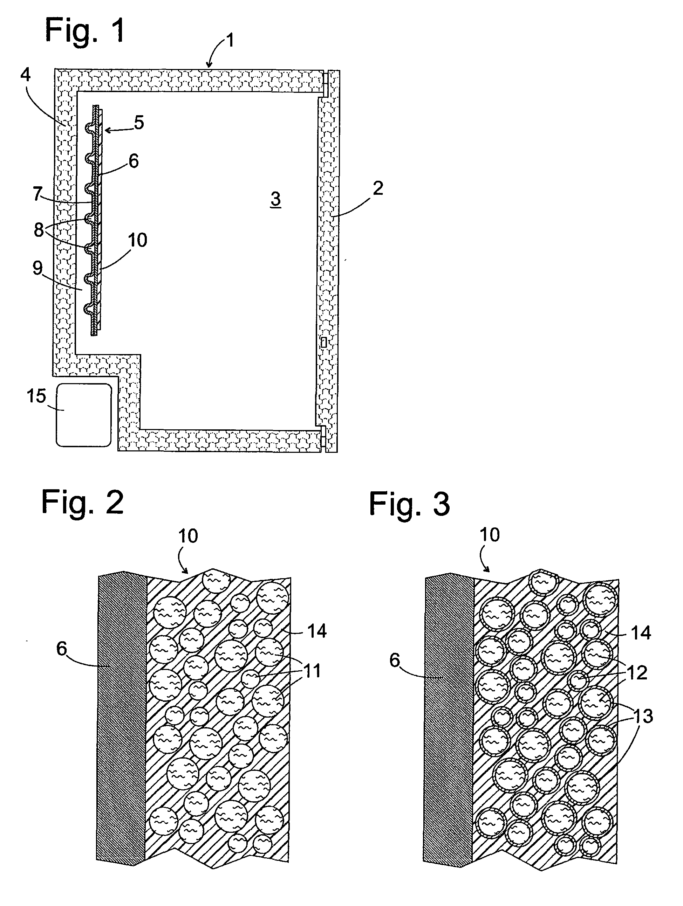

Fig. 1 zeigt einen Haushaltskühlschrank gemäß der vorliegenden Erfindung in einem schematischen Schnitt entlang einer vertikalen Schnittebene. Ein Korpus 1 und eine daran anschlagende Tür 2 umgeben eine Lagerkammer 3. Korpus 1 und Tür 2 umfassen jeweils in an sich bekannter Weise eine feste äußere Schale, eine innere Schale und eine wärmeisolierende Schicht aus Schaumstoff, die einen Zwischenraum zwischen den Schalen ausfüllt.

Im Inneren der Lagerkammer 3 ist in geringem Abstand zu einer Rückwand 4 des Korpus 1 ein plattenförmiger Verdampfer 5 montiert. Bei dem Verdampfer 5 kann es sich insbesondere, wie in der Figur angedeutet, um einen Rollbond-Verdampfer oder einen Tube-on-sheet-Verdampfer handeln. Beide Verdampfertypen umfassen herkömmlicherweise eine Platine 6, die eine ebene erste Hauptoberfläche des Verdampfers bildet, und eine Kältemittelleitung 8 in Form eines in einer zweiten Platine 7 eingetieften Kanals oder eines einseitig an die Platine 6 angelöteten Rohrs springt an der gegenüberliegenden zweiten Hauptoberfläche des Verdampfers 5 vor. Die erste, ebene Hauptoberfläche ist hier dem für Kühlgut nutzbaren Teil der Lagerkammer 3 zugewandt, während die die Kältemittelleitung 8 tragende Hauptoberfläche der Rückwand 4 unter Ausbildung eines schmalen Spalts 9 zugewandt ist. Die freie Anordnung innerhalb der Lagerkammer 3 ermöglicht es dem Verdampfer 5, über seine beiden Hauptoberflächen Wärme mit der Lagerkammer 3 auszutauschen. Die Abmessungen des Verdampfers 5 können daher im Vergleich zu einem Coldwall-Verdampfer gering gehalten werden.

Die dem Hauptteil der Lagerkammer 3 zugewandte ebene Hauptoberfläche ist vollständig oder nahezu vollständig von einem Wärmespeicher 10 bedeckt. Der Wärmespeicher 10 ist eine Folie oder eine dünne Platte mit einer Stärke von wenigen Millimetern aus einem Kunststoff-Trägermaterial, in dem ein Speichermedium gebunden ist. Das Speichermedium, eine wässrige Lösung von z.B. Ethylenglykol oder Harnstoff, füllt in Tröpfchenform kleine Hohlräume des Kunststoffmaterials aus.

Ein Verdichter 15 und ein Verflüssiger, die den Verdampfer 5 mit flüssigem Kältemittel versorgen, sind in einer Maschinenraumnische am Fuß der Rückwand 4 untergebracht.

Fig. 2 zeigt einen vergrößerten schematischen Schnitt durch den Wärmespeicher 10 und die ihn tragende Platine 6, in dem eine Vielzahl von zufällig verteilten, mit dem Speichermedium gefüllten Hohlräumen 11 unterschiedlicher Größe in dem Trägermaterial 14 des Wärmespeichers 10 zu erkennen sind. In der Darstellung der Fig. 2 sind die Hohlräume 11 sphärisch, und die Dicke von Wänden des Trägermaterials 14, die benachbarte Hohlräume 11 trennen, ist von derselben Größenordnung wie die Durchmesser der Hohlräume 11. Im Extremfall könnte das Trägermaterial 14 einen geschlossenporigen Schaumstoff bilden, d.h. die Hohlräume 11 wären nicht mehr sphärisch, wie in der Figur gezeigt, sondern hätten die Form unregelmäßiger, jeweils durch dünne Membranen des Trägermaterials voneinander getrennter und mit dem Speichermedium gefüllter Polyeder.

Einer in Fig. 3 veranschaulichten bevorzugten Variante zufolge ist das Speichermedium 12 in dünnwandigen, diffusionsdichten Kunststoff-Hohlkugeln 13 gekapselt, die ihrerseits in das Trägermaterial 14 eingebettet sind. Die Kapselung erlaubt eine bequeme Fertigung des Wärmespeichers 10 durch Untermischen der Kapseln unter das Trägermaterial und Ausformen des Gemischs zu Platten der gewünschten Stärke.

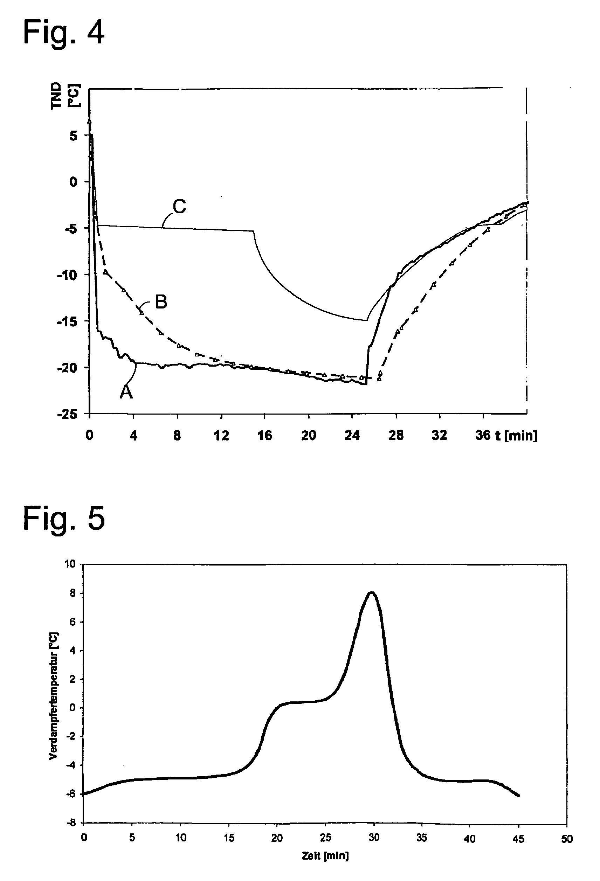

Fig. 4 zeigt im Vergleich typische Temperaturverläufe des Verdampfers 5 vom in Fig. 1 gezeigten Typ mit Wärmespeicher 10, eines frei in einer Lagerkammer angeordneten Verdampfers ohne Wärmespeicher und eines Coldwall-Verdampfers. Der frei aufgehängte Verdampfer ohne Wärmespeicher, repräsentiert durch die Kurve A, weist zu Beginn seiner Betriebsphase, der Zeit t=0, einen sehr steilen Temperaturabfall auf; es dauert knapp eine Minute, um ihn von +5°C auf -15°C abzukühlen, und nach vier Minuten des Betriebs ist ein im Wesentlichen stationäres Temperaturniveau von ca. -20°C erreicht. Der Dampfdruck im Verdampfer hat daher im bei weitem überwiegenden Teil der Betriebsphase des Verdampfers einen sehr niedrigen Wert, so dass ein an den Verdampfer angeschlossener Verdichter ein großes Volumen verdichten muss, um eine gegebene Masse des Kältemittels aus dem Verdampfer abzusaugen, und die zum Verflüssigen des Kältemittels zu überwindende Druckdifferenz hoch ist. Der Grund für den sehr schnellen Temperaturabfall ist die geringe Wärmekapazität des Verdampfers und die Tatsache, dass Wärme aus der umgebenden Lagerkammer 3 den Verdampfer über die ihn allseits umgebende Luft nur langsam erreicht.

Ein etwas langsamerer Temperaturabfall zu Beginn der Betriebsphase ist beim Coldwall-Verdampfer, dargestellt durch die Kurve B, zu beobachten. Der Grund für den langsameren Abfall liegt im engen thermischen Kontakt des Coldwall-Verdampfers zur inneren Schale des Kältegerätekorpus und der Isolationsmaterialschicht, zwischen denen er eingebettet ist und die sich zusammen mit dem Verdampfer abkühlen. Dennoch genügen auch hier knapp zwei Minuten, um den Verdampfer auf-10°C abzukühlen, und während etwa der Hälfte der Betriebsphase befindet sich der Verdampfer bei einer stationären Temperatur von ca. -20°C.

Die Kurve C zeigt den Temperaturverlauf für den Verdampfer 5 des Kältegerätes aus Fig. 1. Zu Beginn der Betriebsphase entspricht die Geschwindigkeit der Abkühlung in etwa der Kurve B, da die Wärmekapazität des Wärmespeichers 10 in diesem Temperaturbereich mit denen der inneren Schale und der Isolationsschicht beim Coldwall-Verdampfer vergleichbar ist. Nach knapp zwei Minuten ist mit -5°C die Gefriertemperatur des Speichermediums 12 des Wärmespeichers 10 erreicht. Die Temperatur bleibt nun solange im Wesentlichen konstant, bis das Speichermedium 12 komplett gefroren ist. Solange dies der Fall ist, ist der Dampfdruck im Verdampfer 5 hoch, und das Kältemittel kann effizient umgewälzt werden. Erst nach dem vollständigen Gefrieren des Speichermediums setzt sich der Temperaturabfall fort, doch endet die Betriebsphase des Verdampfers bereits, bevor die stationären Werte der Kurven A, B erreicht sind.

Wenn man als Kühlleistung des Verdampfers 5 in einer Betriebsphase beispielsweise eine Wert von 100 Watt zugrunde legt und der Einfachheit halber annimmt, dass diese ausschließlich den Wärmespeicher 10, nicht aber die umgebende Lagerkammer 3 kühlt, dann beträgt die dem Wärmespeicher 10 bis zum vollständigen Gefrieren des Speichermediums 12 in einer Zeitspanne von ca. 15 Minuten entzogene Wärmemenge 750 kJ. Die beim Gefrieren eines wässrigen Speichermediums frei werdende Latentwärme beträgt ca. 300 J/g. Es genügt daher eine Menge von ca. 250 g des Speichermediums 12, um eine 15minütige Gefrierphase zu erhalten. Nimmt man an, dass sich diese 250g des Speichermediums 12 auf eine Fläche des Verdampfers 5 von z.B. 40 x 40 cm verteilen, dann entfallen auf jeden cm² des Verdampfers ca. 0,15g des Speichermediums 12. Dies zeigt, dass eine Schichtdicke des Wärmespeichers 10 von wenigen mm ausreicht, um den Temperaturverlauf der Kurve C zu realisieren.

Am Ende der Betriebsphase des Verdampfers, bei t= ca. 25 min, steigt die Temperatur bei allen drei Kurven A, B, C wieder an, wobei die Anstiegsgeschwindigkeit aufgrund vergleichbarer Wärmekapazitäten bei den Kurven B, C, zunächst wieder ähnlich und niedriger als bei der Kurve A ist. Sobald jedoch die Gefriertemperatur des Speichermediums 12 erreicht ist, stagniert die Kurve C, und es kann der Fall auftreten, dass sie nicht wieder auf 0°C ansteigt, bevor die nächste Betriebsphase des Verdampfers beginnt. Da dies zur Akkumulation von Reif auf dem Verdampfer 5 führt, ist in regelmäßigen Abständen ein Abtauen des Verdampfers 5 erforderlich. Zu diesem Zweck wird die nächste Betriebsphase des Verdampfers 5 verzögert, und es resultiert der in Fig. 5 gezeigte Temperaturverlauf. Die Stagnationsphase nimmt hier das Zeitintervall von t=0 bis ca. t=16 min ein. Nach dem Auftauen des Speichermediums 12 folgt ein relativ schneller Anstieg der Verdampfertemperatur auf 0°C und eine neuerliche Stagnationsphase, in der der Reif auf dem Verdampfer 5 abtaut und das Tauwasser abfließt. Der Abschluss dieser Phase ist zu erkennen an einem weiteren Temperaturanstieg des Verdampfers 5 bis auf die Betriebstemperatur der Lagerkammer 3 oder, da ein eigentlich erforderlicher Betrieb des Verdampfers herausgezögert worden ist, um das Abtauen zu ermöglichen, sogar auf eine etwas über der Betriebstemperatur der Lagerkammer liegende Temperatur. Zur Zeit t = ca. 30 min setzt der Betrieb des Verdampfers 5 wieder ein, und es wiederholt sich der in Fig. 4 als Kurve C dargestellte Verlauf.

## Patentansprüche

1. Kältegerät, insbesondere Haushaltskühlgerät mit einer Lagerkammer (3) für Kühlgut, einem in thermischem Kontakt mit der Lagerkammer (3) angeordneten, zum Halten der Lagerkammer (3) in einem vorgegebenen Temperaturbereich intermittierend arbeitenden Verdampfer (5) und einem dem Verdampfer (5) zugeordneten Wärmespeicher (10), der ein Speichermedium (12) enthält, das in Betriebs- und Ruhephasen des Verdampfers (5) jeweils seinen Aggregatzustand ändert, wobei der vorgegebene Temperaturbereich der Lagerkammer (3) über 0°C und die Schmelztemperatur des Speichermediums (12) unter 0°C liegt, **dadurch gekennzeichnet, dass** der Wärmespeicher (10) ein Trägermaterial (14) umfasst, in dem das Speichermedium (12) tröpfchenweise in Zellen (11) gebunden ist.

2. Kältegerät nach Anspruch 1, **dadurch gekennzeichnet, dass** die Schmelztemperatur des Speichermediums (12) unter -2°C liegt.

3. Kältegerät nach Anspruch 1 oder 2, **dadurch gekennzeichnet, dass** die Schmelztemperatur des Speichermediums (12) über -10°C liegt.

4. Kältegerät nach einem der vorhergehenden Ansprüche, **dadurch gekennzeichnet, dass** das Speichermedium (12) eine wässrige Lösung, insbesondere von Ethylenglykol oder Harnstoff, ist.

5. Kältegerät nach einem der Ansprüche 1 bis 4, **dadurch gekennzeichnet, dass** das Speichermedium (12) enthaltende Kapseln (13) in das Trägermaterial (14) eingebettet sind.

6. Kältegerät nach einem der vorhergehenden Ansprüche, **dadurch gekennzeichnet, dass** der Verdampfer (5) in der Lagerkammer (3) angeordnet ist.

7. Kältegerät nach einem der vorhergehenden Ansprüche, **dadurch gekennzeichnet, dass** der Wärmespeicher (10) in körperlichem Kontakt mit dem Verdampfer (5) angeordnet ist.

8. Kältegerät nach einem der vorhergehenden Ansprüche, **dadurch gekennzeichnet, dass** der Verdampfer (5) plattenförmig ist und dass eine Seite (6) des Verdampfers (5) wenigstens zum überwiegenden Teil von dem Wärmespeicher (10) bedeckt ist.

9. Kältegerät nach einem der vorhergehenden Ansprüche, **dadurch gekennzeichnet, dass** der Verdampfer (5) benachbart zu einer Wand (4) der Lagerkammer (3) angeordnet ist und der Wärmespeicher (10) an einer von der Wand (4) abgewandten Seite des Verdampfers (5) angeordnet ist.

10. Kältegerät nach einem der vorhergehenden Ansprüche, **dadurch gekennzeichnet, dass** der Verdampfer (5) ein Rollbond-Verdampfer oder ein Tube-on-Sheet-Verdampfer ist und dass der Wärmespeicher (10) an einer ebenen Seite (6) des Verdampfers (5) angeordnet ist.

11. Kältegerät nach einem der vorhergehenden Ansprüche, **dadurch gekennzeichnet, dass** die Kühlleistung des Verdampfers (5) in einer Betriebsphase bemessen ist, um das Speichermedium (12) in wenigstens zwei und/oder höchstens zwanzig Minuten zu gefrieren.

12. Kältegerät nach einem der vorhergehenden Ansprüche, **dadurch gekennzeichnet, dass** die mittlere Dauer einer Betriebsphase des Verdampfers (5) länger als die zum Gefrieren des Speichermediums (12) erforderliche Zeit ist.

13. Kältegerät nach einem der vorhergehenden Ansprüche, **dadurch gekennzeichnet, dass** die mittlere Dauer einer Betriebsphase des Verdampfers (5) höchstens doppelt so lang wie die zum Gefrieren des Speichermediums (12) erforderliche Zeit ist.

## Claims

1. Refrigerator, especially household refrigerator with a storage chamber (3) for refrigerated items, an intermittently operating evaporator (5) disposed in thermal contact with the storage chamber (3) for keeping the storage chamber (3) in a predetermined temperature range and a heat accumulator (10) assigned to the evaporator (5) which contains a storage medium (12), which in operating and idle phases of the evaporator (5) changes its aggregate state in each case, wherein the predetermined temperature range of the storage chamber (3) lies above 0°C and the melting temperature of the storage medium (12) lies below 0°C, **characterised in that** the heat accumulator (10) includes a carrier material (14), in which the storage medium (12) is bound in small droplets in cells (11).

2. Refrigerator according to claim 1, **characterised in that** the melting temperature of the storage medium (12) lies below -2°C.

3. Refrigerator according to claim 1 or 2, **characterised in that** the melting temperature of the storage medium (12) lies above -10°C.

4. Refrigerator according to one of the preceding claims, **characterised in that** the storage medium (12) is an aqueous solution, especially of Ethylene glycol or urea.

5. Refrigerator according to claim 1 to 4, **characterised in that** capsules (13) containing the storage medium (12) are embedded into the carrier material (14).

6. Refrigerator according to one of the preceding claims, **characterised in that** the evaporator (5) is disposed in the storage chamber (3).

7. Refrigerator according to one of the preceding claims, **characterised in that** the heat accumulator (10) is disposed in physical contact with the evaporator (5).

8. Refrigerator according to one of the preceding claims, **characterised in that** the evaporator (5) is plate-shaped and that one side (6) of the evaporator (5) is at least predominantly covered by the heat accumulator (10).

9. Refrigerator according to one of the preceding claims, **characterised in that** the evaporator (5) is disposed adjacent to a wall (4) of the storage chamber (3) and the heat accumulator (10) is disposed on a side of the evaporator (5) facing away from the wall (4).

10. Refrigerator according to one of the preceding claims, **characterised in that** the evaporator (5) is a roll bond evaporator or a tube-on-sheet evaporator and that the heat accumulator (10) is disposed on a flat side (6) of the evaporator (5).

11. Refrigerator according to one of the preceding claims, **characterised in that** the cooling power of the evaporator (5) is measured in an operating phase in order to freeze the storage medium (12) in at least two and/or at most twenty minutes.

12. Refrigerator according to one of the preceding claims, **characterised in that** the average duration of an operating phase of the evaporator (5) is longer than the time required to freeze the storage medium (12).

13. Refrigerator according to one of the preceding claims, **characterised in that** the average duration of an operating phase of the evaporator (5) is at most twice as long as the time required to freeze the storage medium (12).

## Revendications

1. Appareil frigorifique, notamment appareil frigorifique ménager, comprenant une chambre de stockage (3) pour produits réfrigérés, un évaporateur (5) placé en contact thermique avec la chambre de stockage (3) et fonctionnant par intermittence pour maintenir la chambre de stockage (3) dans un domaine de température prédéfini, et un accumulateur de chaleur (10) associé à l'évaporateur (5) et qui contient un fluide d'accumulateur (12) qui change à chaque fois d'état dans des phases de fonctionnement et de repos de l'évaporateur (5), le domaine de température prédéfini de la chambre de stockage (3) étant supérieur à 0°C et la température de fusion du fluide d'accumulateur (12) inférieure à 0°C, **caractérisé en ce que** l'accumulateur de chaleur (10) comprend un matériau de support (14) dans lequel le fluide d'accumulateur (12) est lié sous forme de gouttelettes dans des cellules (11).

2. Appareil frigorifique selon la revendication 1, **caractérisé en ce que** la température de fusion du fluide d'accumulateur (12) est inférieure à -2°C.

3. Appareil frigorifique selon la revendication 1 ou 2, **caractérisé en ce que** la température de fusion du fluide d'accumulateur (12) est supérieure à -10°C.

4. Appareil frigorifique selon l'une des revendications précédentes, **caractérisé en ce que** le fluide d'accumulateur (12) est une solution aqueuse notamment d'éthylèneglycol ou d'urée.

5. Appareil frigorifique selon l'une des revendications 1 à 4, **caractérisé en ce que** des capsules (13) contenant le fluide d'accumulateur (12) sont noyées dans le matériau de support (14).

6. Appareil frigorifique selon l'une des revendications précédentes, **caractérisé en ce que** l'évaporateur (5) est placé dans la chambre de stockage (3).

7. Appareil frigorifique selon l'une des revendications précédentes, **caractérisé en ce que** l'accumulateur de chaleur (10) est placé en contact physique avec l'évaporateur (5).

8. Appareil frigorifique selon l'une des revendications précédentes, **caractérisé en ce que** l'évaporateur (5) est en forme de plaque et **en ce qu'**un côté (6) de l'évaporateur (5) est recouvert au moins en majeure partie de l'accumulateur de chaleur (10).

9. Appareil frigorifique selon l'une des revendications précédentes, **caractérisé en ce que** l'évaporateur (5) est placé au voisinage d'une paroi (4) de la chambre de stockage (3) et l'accumulateur de chaleur (10) est placé sur un côté opposé à ladite paroi (4) de l'évaporateur (5).

10. Appareil frigorifique selon l'une des revendications précédentes, **caractérisé en ce que** l'évaporateur (5) est un évaporateur Rollbond ou un évaporateur Tube-on-Sheet et **en ce que** l'accumulateur de chaleur (10) est placé sur un côté plat (6) de l'évaporateur (5).

11. Appareil frigorifique selon l'une des revendications précédentes, **caractérisé en ce que** la puissance frigorifique de l'évaporateur (5) en phase de fonctionnement est calculée de façon à congeler le fluide d'accumulateur (12) en au moins deux et/ou au plus vingt minutes.

12. Appareil frigorifique selon l'une des revendications précédentes, **caractérisé en ce que** la durée moyenne d'une phase de fonctionnement de l'évaporateur (5) est plus longue que le temps nécessaire pour congeler le fluide d'accumulateur (12).

13. Appareil frigorifique selon l'une des revendications précédentes, **caractérisé en ce que** la durée moyenne d'une phase de fonctionnement de l'évaporateur (5) est au maximum deux fois plus longue que le temps nécessaire pour congeler le fluide d'accumulateur (12).
